# EUROPÄISCHE PATENTANMELDUNG

(11) **EP 4 663 968 A1**
(43) Veröffentlichungstag der Anmeldung: **17.12.2025**
(21) Anmeldenummer: 25182021.3
(22) Anmeldetag: 11.06.2025
(51) Int. Cl.: F16D 55/226, F16D 65/00, F16D 65/18, F16D 55/00, F16D 121/14, F16D 125/06, F16D 125/40, F16D 125/08

(54) **ABSTANDSHALTER FÜR EINE SCHEIBENBREMSE EINES NUTZFAHRZEUGS, DICHTUNGSBAUGRUPPE UND SCHEIBENBREMSE**

(30) Priorität: 11.06.2024 DE 102024116336
(71) Anmelder: BPW Bergische Achsen Kommanditgesellschaft, 51674 Wiehl (DE)
(72) Erfinder: Pehle, Michael, 51674 Wiehl (DE); Klaas, Thomas, 51580 Reichshof (DE); Abt, Christian, 51643 Gummersbach (DE)
(74) Vertreter: DREISS Patentanwälte PartG mbB

(57) **Zusammenfassung**

Die Erfindung betrifft einen Abstandshalter (44, 68) für eine Scheibenbremse (10), insbesondere eines Nutzfahrzeugs zur Anordnung zwischen zum einem einen Faltenbalg (42) der Scheibenbremse und zum anderen einem Druckstück und/oder einer Stellspindel (16) der Scheibenbremse. Die Erfindung betrifft auch eine Dichtungsbaugruppe (38) zur Abdichtung eines Bremssattels gegenüber einem Bremsbelag, mit einem Faltenbalg und mit einem Abstandshalter. Die Erfindung betrifft weiter eine Scheibenbremse (10), insbesondere für ein Nutzfahrzeug, mit einem eine Bremsscheibe übergreifenden Bremssattel und mit im Bremssattel gelagerten Bremsbelägen, mit einer im Bremssattel gelagerten, von einer Zuspanneinrichtung beaufschlagbaren Stellspindel, die beim Bremsvorgang die Bremsbeläge unmittelbar oder auch mittelbar, beispielsweise über eine Druckstück, gegen die Bremsscheibe drängt, mit einer Dichtungsbaugruppe zur Abdichtung eines Bremssattels gegenüber einem Bremsbelag, wobei die Dichtungsbaugruppe einen Faltenbalg zum Abdichten einer die Stellspindel umgebenden, im Bremssattel oder in einer am Bremssattel anordenbaren Verschlussplatte vorgesehenen Durchtrittsöffnung, und einen Abstandshalter aufweist.

## Beschreibung

Die Erfindung betrifft einen Abstandshalter für eine Scheibenbremse, insbesondere eines Nutzfahrzeugs zur Anordnung zwischen zum einem einen Faltenbalg der Scheibenbremse und zum anderen einem Druckstück und/oder einer Stellspindel der Scheibenbremse. Die Erfindung betrifft auch eine Dichtungsbaugruppe zur Abdichtung eines Bremssattels gegenüber einem Bremsbelag, mit einem Faltenbalg und mit einem Abstandshalter. Die Erfindung betrifft weiter eine Scheibenbremse, insbesondere für ein Nutzfahrzeug, mit einem eine Bremsscheibe übergreifenden Bremssattel und mit im Bremssattel gelagerten Bremsbelägen, mit einer im Bremssattel gelagerten, von einer Zuspanneinrichtung beaufschlagbaren Stellspindel, die beim Bremsvorgang die Bremsbeläge unmittelbar oder auch mittelbar, beispielsweise über eine Druckstück, gegen die Bremsscheibe drängt, und mit einer Dichtungsbaugruppe zur Abdichtung eines Bremssattels gegenüber einem Bremsbelag, wobei die Dichtungsbaugruppe einen Faltenbalg zum Abdichten einer die Stellspindel umgebenden, im Bremssattel oder in einer am Bremssattel anordenbaren Verschlussplatte vorgesehenen Durchtrittsöffnung, und einen Abstandshalter aufweist.

Dabei kann der Faltenbalg einerseits insbesondere in eine Verschlussplatte, die eine Montageöffnung des Bremssattels verschließt und die von den Stellspindeln durchtreten wird, eingepresst und andererseits an der Stellspindel, am Druckstück oder an einer den Faltenbalg verschließenden Verschlusskappe gehalten sein. Für den Fall einer einstückigen Ausbildung des Bremssattels, wenn also keine Verschlussplatte zum Einsatz kommt, ist der Faltenbalg direkt am Bremssattel, vorzugsweise ebenfalls durch Einpressen befestigt.

Zur axialen Beweglichkeit des Faltenbalgs, insbesondere beim Zuspannen der Bremse, besteht der Faltenbalg zumindest in seinem formbaren Bereich aus einem Elastomer.

Konstruktionsbedingt befindet sich der Faltenbalg in unmittelbarer Nähe zum Druckstück und zur Stellspindel, wobei das Druckstück direkt am Bremsbelag, d.h. einer einen Reibbelag tragenden Belagträgerplatte anliegt. Das Druckstück liegt dabei außerhalb des mit dem Faltenbalg abgedichteten Raumes des Bremssattels; die Stellspindel liegt innerhalb des Raumes.

Im Fall einer Bremsung heizen sich aufgrund der entstehenden Reibungswärme sowohl der jeweilige Bremsbelag wie auch das Druckstück und die Stellspindel sehr stark auf. In der Folge kommt es häufig zu einer Kontaktierung des Faltenbalg am Druckstück oder der Stellspindel, was zu einer thermischen Überlastung des Elastomers führt, das dadurch spröde und in Konsequenz undicht wird.

Auch besteht die Gefahr, dass der Faltenbalg mit seinem Elastomerbereich mit dem Druckstück oder der Stellspindel verklebt, wodurch die Beweglichkeit des Faltenbalgs eingeschränkt und bei zunehmendem Verschleiß sogar zu dessen Zerstörung führt.

Auch die thermische Abstrahlung des Bremsbelages, d.h. der Belagträgerplatte führt zu einer Beschädigung des Faltenbalgs und letztlich zu dessen Funktionsausfall infolge von Undichtigkeit.

Damit besteht aber die Gefahr, dass die zu schützenden Bauteile, wie die Stellspindel einschließlich Gewindelagerungen im Bremssattel, beschädigt werden, so dass es unter Umständen zu einer Störung dieser Funktionsteile bis hin zu deren Ausfall kommen kann.

Aus der EP 2 877 754 B1 sind eine Abstandshalter und eine Scheibenbremse mit einem Abstandshalter bekannt, wobei dort der Faltenbalg auf seiner dem Druckstück, das zwischen der Stellspindel und dem Bremsbelag vorgesehen ist, zugewandten Seite den Abstandshalter aufweist und wobei der Abstandshalter dort als umlaufender Kragen gebildet ist. Der Abstandshalter ist also auf der Außenseite des Faltenbalgs, hin zum Druckstück gewandt vorgesehen. Allerdings hat sich gezeigt, dass der in der EP 2 877 754 B1 offenbart Abstandshalter nur bedingt den Montage- und Praxisanforderungen gerecht wird.

Aus der DE 10 2018 122 726 A1 ist eine Scheibenbremse mit einem als Blechring ausgebildeten Abstandhalter bekannt, der Aussparungen zur Verringerung seiner Biegesteifigkeit aufweist.

Aus der DE 10 2006 039 297 A1 ist eine Scheibenbremse bekannt, die ein Schirmelement umfasst, dass an einem Topf verrastend angeschlossen ist.

Aus der DE 10 2015 105 344 Al ist eine Scheibenbremse bekannt, die einen Ring umfasst, an dem Federlaschen vorgesehen sind.

Aus der US 4 688 661 A ist ein Bremsaktuator für insbesondere Trommelbremsen bekannt, bei der ein hutförmiges Tragelement vorgesehen ist, das an seinen radial äußeren Schenkeln und seinem Mantelabschnitt geschlitzt ausgebildet ist, wodurch es elastisch zusammendrückbar ist.

Der Erfindung liegt die Aufgabe zugrunde, einen Abstandshalter, eine Dichtungsbaugruppe und eine Scheibenbremse so weiterzuentwickeln, dass eine einfache und sichere Montage der Scheibenbremse sowie deren Betriebssicherheit weiter verbessert und die Standzeit weiter erhöht wird.

Die Erfindung wird gelöst durch einen Abstandshalter mit den Merkmalen des Anspruchs 1. Durch Vorsehen des Ringabschnitts kann eine sichere Befestigung des Abstandshalters insbesondere am Faltenbalg gewährleistet werden. Durch Vorsehen der Biegeabschnitte kann gewährleistet werden, dass die Segmente zum einen eine Grundposition einnehmen können und zum anderen insbesondere bei einer Bewegung des Faltenbalgs dennoch sicher verhindern können, dass der Faltenbalg in Berührkontakt mit dem Druckstück oder der Stellspindel kommen kann. Die einzelnen Segmente sind insbesondere ringssegmentartig mit einem radial außen liegenden Außenrand, einem radial innenliegenden Innenrand und mit zwei Seitenränder ausgebildet. Die Biegeabschnitte sind dabei durch Stege gebildet, die zwischen dem Ringabschnitt und den Segmenten vorhanden sind. Die an einem Segment vorgesehenen Stege sind beabstandet zum Seitenrand des jeweiligen Segments angeordnet; also gegenüber dem Seitenrand zeitlich nach innen versetzt. Dies erhöht insbesondere die Beweglichkeit der Segmente im Bereich ihrer Seitenränder. Vorzugsweise sind zwischen jedem Segment und dem Ringabschnitt wenigstens zwei voneinander beabstandete Stege vorgesehen.

Der Abstandshalter kann insbesondere zwischen dem unmittelbar gegen den Bremsbelag wirkenden Druckstück und dem Faltenbalg vorgesehen sein, wie es in der EP 2 877 754 B1 beschrieben ist; der Abstandshalter ist dann außerhalb der durch den Faltenbalg abgedichteten Durchtrittsöffnung des Bremssattels vorgesehen.

Vorzugsweise ist der Abstandshalter zwischen dem Faltenbalg und der vom Faltenbalg umgebenen Stellspindel vorgesehen; der Abstandshalter befindet sich dann innerhalb der durch den Faltenbalg abgedichteten Durchtrittsöffnung des Bremssattels. Insbesondere dann, wenn sich der Abstandhalter innerhalb des Faltenbalgs befindet, kann der Faltenbalg vor Berührkontakt mit der Stellspindel, und damit vor Beschädigungen, sicher geschützt werden.

Vorzugsweise sind die Segmente gegenüber dem Ringabschnitt elastisch nachgiebig bewegbar. D. h., dass die Segmente in eine vorgebbare Position rückfedern, nachdem sie aus dieser Position ausgelenkt wurden. Bei einem von außen her einwirkenden Steinschlag auf den Faltenbalg wird dieser nicht mehr auf die Gewindespitzen geschlagen und ist somit gegen Durchstoßen von innen her gesichert.

Der Ringabschnitt ist insbesondere als geschlossener, kreisrunde Ringabschnitt ausgebildet. Denkbar ist aber auch, dass der Ringabschnitt aus unterbrochenen Ringabschnitt-Segmenten gebildet wird. Der Ringabschnitt kann auch Aussparungen oder Durchbrüche, insbesondere zu dessen Befestigung, aufweisen.

Die Biegeabschnitte können zur Erreichbarkeit des Verbiegens eine Materialstärke ausweisen, die geringer ist als die Materialstärke der Segmente und/oder des Ringabschnitts. Die Biegeabschnitte können insbesondere als filmscharnierartig ausgebildet sein.

Die Biegeabschnitte und/oder die Seitenränder zweier benachbarter Segmente sind insbesondere derart ausgebildet, dass erreicht werden kann, dass die Segmente gegenüber der Längsachse einen Biegewinkel im Bereich zwischen wenigstens 10° und 90° einschließen. Dadurch kann eine ausreichende Biegfähigkeit gewährleistet werden.

Weiter ist vorteilhaft, wenn die Segmente dann, wenn der Biegewinkel im Bereich von 90° liegt, eine wenigstens weitgehend ebene Konfiguration einnehmen. Diese wenigstens weitgehend ebene Konfiguration kann insbesondere eine Grundposition, insbesondere eine Lager- oder Montageposition, darstellen. Der Abstandhalter weist dann eine sehr geringfügige Erstreckung in Richtung der Längsachse auf.

Andererseits ist vorteilhaft, dass dann, wenn der Biegewinkel im Bereich zwischen 50° und 10° liegt, die Segmente eine trichterförmige Konfiguration einnehmen. Diese trichterförmige Konfiguration kann insbesondere dann ergeben, wenn die Stellspindel vergleichsweise weit ausgefahren ist und bei der die Segmente des Abstandshalters funktionssicher zwischen der Stellspindel und dem Faltenbalg angeordnet sind.

Weiter ist denkbar, dass die Segmente so ausgebildet sind, dass dann, wenn der Biegewinkel im Bereich von 10° liegt, die Seitenränder der Segmente zu mindestens bereichsweise einen geringfügigen Abstand untereinander aufweisen. Dies hat den Vorteil, dass bei vergleichsweise kleinen Biegewinkel der Faltenbalg dennoch ausreichend geschützt ist. Die Ausbildung kann dabei so sein, dass sich die freien Enden der Segmente berühren.

Vorteilhaft ist ebenfalls, wenn das Längenverhältnis in Längsrichtung, also unter Zugrundelegung eines Biegewinkels von 0°, zwischen dem Ringabschnitt und einem Segment im Bereich zwischen 1:3 und 1:7 und vorzugsweise im Bereich zwischen 1:4 und 1:5 liegt.

Als ebenfalls vorteilhaft hat sich gezeigt, wenn wenigstens ein Segment und vorzugsweise alle Segmente tricherteilförmig um die Längsachse verlaufend ausgebildet sind. Dabei kann vorgesehen sein, dass in Längsrichtung die Segmente unterschiedliche tricherteilförmige Abschnitte aufweisen. Die Segmente können insbesondere an ihren axialen Enden anders trichterteilförmig ausgebildet sein. Die Ausbildung kann dabei so sein, dass sich die freien Enden der Segmente berühren.

Eine weitere, ebenfalls besonders bevorzugte Ausbildung sieht vor, dass wenigstens ein Segment und vorzugsweise alle Segmente flach und jeweils in einer Ebene liegend ausgebildet sind. Dies hat den Vorteil, dass dann, wenn die Segmente einen Biegewinkel von 90° einnehmen, sämtliche Segmente vorzugsweise in einer gemeinsamen Segmentebene liegen. Diese Konfiguration eignet sich insbesondere als Grundposition, also insbesondere als Lager-, Transport- oder Montageposition.

Weiterhin ist vorteilhaft, wenn die die Segmentlänge in Längsrichtung bei maximal ausgespindelter Stellspindel 20 bis 80% und vorzugsweise 30 bis 50% der axialen Balgerstreckung beträgt.

Es hat sich gezeigt, dass der Abstandshalter vorzugsweise aus Kunststoff und weiter vorzugsweise aus TEP, TPU, TPC und/oder TPV besteht. Dennoch sind auch Abstandhalter aus anderen Materialien, insbesondere aus Metall, denkbar.

Weiter ist vorteilhaft, wenn die Materialstärke des Abstandshalters zwischen 0,4 mm und 1,2 mm und vorzugsweise zwischen 0,7 bis 0,9 mm beträgt.

Die eingangs genannte Aufgabe wird auch gelöst durch eine Dichtungsbaugruppe zur Abdichtung eines Bremssattels gegenüber einem Bremsbelag, mit einem Faltenbalg und mit einem erfindungsgemäßen Abstandshalter.

Der Faltenbalg und der Abstandhalter können dabei entweder einstückig ausgebildet sein oder aus unterschiedlichen Bauteilen bestehen. Für den Fall, dass der Abstandhalter separat zum Faltenbalg ausgebildet ist, ist vorteilhaft, wenn dieser am Faltenbalg befestigt ist, insbesondere durch kleben, Verrasten oder verpressen. Weiterhin ist vorteilhaft, wenn der Ringabschnitt mit seiner äußeren Mantelfläche an der Innenseite des Faltenbalgs befestigt ist.

Bei einer besonders bevorzugten Ausführungsform umfasst die Dichtungsbaugruppe eine Verschlusskappe, die den Faltenbalg auf seiner dem Bremsbelag zugewandten Seite verschließt. Die Verschlusskappe ist insbesondere topfförmige mit einem umlaufenden, in axialer Richtung weisenden Kragen ausgebildet und aus einem metallischen Werkstoff. Die Verschlusskappe ist weiter insbesondere stoffschlüssig mit dem Faltenbalg verbunden.

Zur Befestigung des Abstandshalters ist denkbar, dass der Ringabschnitt zwischen dem Faltenbalg und dem Kragen vorgesehen ist oder das der Ringabschnitt auf der dem Faltenbalg abgewandten Seite des Kragens befestigt ist.

Weiterhin ist vorteilhaft, wenn der der Faltenbalg mit Faltabschnitten und Faltenspitzen ausgebildet ist, wobei die einzelnen Faltabschnitte vom Bremsbelag weg größer werdende Durchmesser aufweisen.

Der Faltenbalg ist vorzugsweise so ausgebildet, dass in einem nicht entfalteten Zustand benachbarte Faltabschnitte nebeneinander und die Faltspitzen wenigstens weitgehend in einer quer zur Längsachse verlaufenden Faltspitzenebene liegen. Dies kann insbesondere eine Grundposition, und weiter insbesondere eine Lager-, Transport oder Montageposition darstellen. Besonders vorteilhaft ist es, wenn in dieser Grundposition der Biegewinkel der Segmente 90° beträgt, sodass diese dann in der oder wenigstens weitgehend parallel zur Faltspitzenebene verlaufen. Die Segmente sind dabei vorzugsweise beabstandet zum Faltenbalg.

Weiterhin hat sich als vorteilhaft gezeigt, wenn die Biegesteifigkeit der Biegeabschnitte geringer ist als die Formstabilität des Faltenbalgs. Dies hat zur Folge, dass die Segmente einer Bewegung des Faltenbalgs folgen und es so nicht zu einer Beschädigung des Faltenbalgs durch die Segmente kommen kann.

Denkbar ist weiterhin, dass die Dichtungsbaugruppe eine Verschlussplatte zum Verschließen einer im Bremssattel vorgesehenen Durchtrittsöffnung aufweist, wobei die Verschlussplatte eine Öffnung für die Stellspindel aufweist und wobei das dem Abstandhalter abgewandte Ende des Faltenbalgs an der Verschlussplatte befestigt ist. Das vorsehen der Verschlussplatte hat den Vorteil, dass die Durchtrittsöffnung im Bremssattel vergleichsweise Ausgebildet werden kann. Diese vergleichsweise große Durchtrittsöffnung kann mit der Verschlussplatte sicher verschlossen werden.

Weiterhin ist vorteilhaft, wenn die jeweiligen Außenränder eines Segments wenigstens weitgehend parallel zu den jeweiligen Innenrändern des jeweiligen Segments verlaufen.

Weiter kann vorgesehen sein, dass die Seitenränder eines Segments konzentrisch hin zur Längsachse oder wenigstens weitgehend parallel zueinander verlaufend ausgebildet sind.

Zudem hat sich als vorteilhaft gezeigt, wenn der Ringabschnitt eine axiale Erstreckung und eine radiale Erstreckung aufweist, wobei die axiale Erstreckung größer als die axiale Erstreckung ist.

Weiter kann vorgesehen sein, dass die Stege eine Längserstreckung und die Segmente eine Längserstreckung aufweisen, wobei das Verhältnis zwischen der Längserstreckung eines Stegs und der Längserstreckung eines Segmente im Bereich von 1:10 bis 1:1, vorzugsweise im Bereich von 1:7 bis 1:2 und weiter vorzugsweise im Bereich von 1:5 bis 1:2 liegt.

Weiter kann vorgesehen sein, dass die Stege eine Quererstreckung und die Segmente eine Quererstreckung aufweisen, wobei der Verhältnis zwischen der Quererstreckung eines Stegs und der Quererstreckung eines Segments im Bereich von 1:15 bis 1:3, vorzugsweise im Bereich von 1:12 bis 1:5 und weiter vorzugsweise im Bereich von 1:10 bis 1:7 liegt.

Weiter kann vorgesehen sein, dass die Stege eine Quererstreckung aufweisen und wobei zwischen zwei an einem Segment vorgesehenen Stegen ein Abstand vorgesehen ist, wobei das Verhältnis zwischen der Quererstreckung eines Stegs und des Abstands im Bereich von 1:10 bis 1:1, vorzugsweise im Bereich von 1:5 bis 1:1 und weiter vorzugsweise im Bereich von 1:2,5 bis 1:1,5 liegt.

Weiter kann vorgesehen sein, dass die Stege eine Quererstreckung aufweisen und wobei die Stege um ein Maß X gegenüber den Seitenrändern 62 seitlich nach innen zurückversetzt sind, wobei das Verhältnis zwischen der Quererstreckung eines Stegs und des Maßes X im Bereich von 1:4 bis 1:0,25, vorzugsweise im Bereich von 1:2 bis 1:0,5 und weiter vorzugsweise im Bereich von 1:1,25 bis 1:0,75 liegt.

Die eingangs genannte Aufgabe wird auch gelöst durch eine Scheibenbremse für ein Nutzfahrzeug, mit einem eine Bremsscheibe übergreifenden Bremssattel und mit im Bremssattel gelagerten Bremsbelägen, mit einer im Bremssattel gelagerten, von einer Zuspanneinrichtung beaufschlagbaren Stellspindel, die beim Bremsvorgang die Bremsbelägen gegen die Bremsscheibe drängt, mit einer Dichtungsbaugruppe zur Abdichtung eines Bremssattels gegenüber einem Bremsbelag, die einen Faltenbalg zum Abdichten einer die Stellspindel umgebenden, im Bremssattel oder in einer am Bremssattel anordenbaren Verschlussplatte vorgesehenen Durchtrittsöffnung, und einen Abstandshalter aufweist. Die Scheibenbremse zeichnet sich dadurch aus, dass der Abstandshalter ein erfindungsgemäßer Abstandhalter und/oder die Dichtungsbaugruppe eine erfindungsgemäße Dichtungsbaugruppe ist.

Weitere Einzelheiten und vorteilhafte Ausgestaltungen der Erfindung sind der nachfolgenden Beschreibung zu entnehmen, anhand derer Ausführungsbeispiele der Erfindung beschrieben sind. Es zeigen:
- Figur 1:: einen Längsschnitt durch einen Ausschnitt einer erfindungsgemäßen Scheibenbremse in Grundposition gemäß einer ersten Ausführungsform,
- Figur 2:: die Dichtungsbaugruppe der Scheibenbremse gemäß der ersten Ausführungsform,
- Figur 3:: den Abstandhalter der Dichtungsbaugruppe der ersten nach Figur 2 als Einzelteil,
- Figur 4:: einen Längsschnitt durch die Scheibenbremse nach Figur 1 bei ausgespindelter Stellspindel,
- Figur 5:: die Dichtungsbaugruppe einer Scheibenbremse gemäß der zweiten Ausführungsform,
- Figur 6:: den Abstandhalter der Dichtungsbaugruppe nach Figur 5 als Einzelteil.

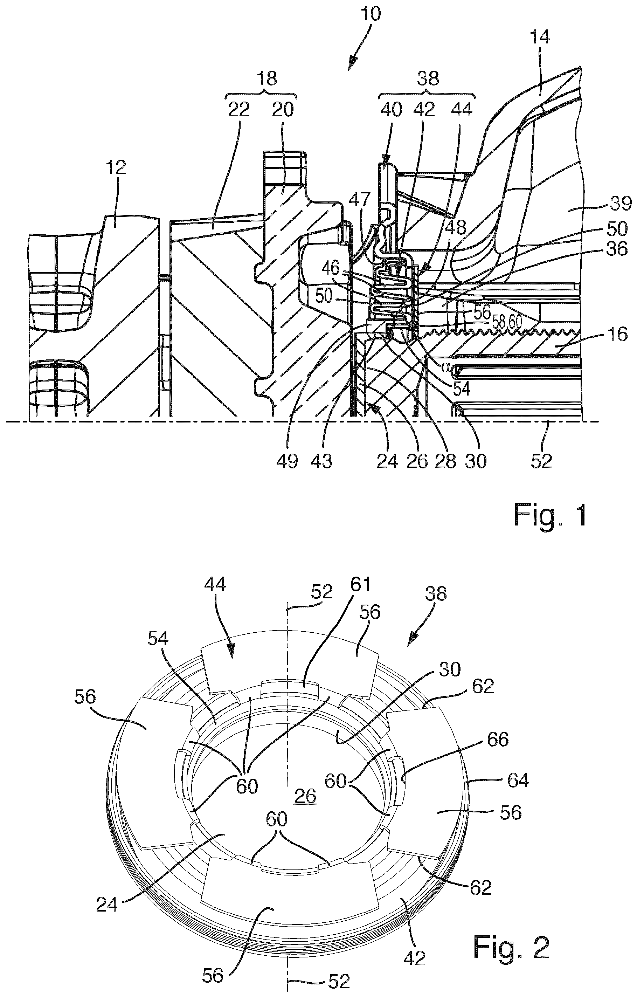

In der Figur 1 ist ein Ausschnitt aus einer erfindungsgemäßen Scheibenbremse 10 gezeigt, die einen eine Bremsscheibe 12 übergreifenden Bremssattel 14 aufweist.

Über eine Spanneinrichtung wird über eine im Bremssattel 14 verschieblich gelagerte Stellspindel 16 ein im Bremssattel 14 gelagerter Bremsbelag 18 beim Bremsvorgang gegen die Bremsscheibe 12 gedrängt. Der Bremsbelag 18 besteht dabei aus einer Rückenplatte 20 und aus auf der Rückenplatte 20 vorhandenem Reibbelag 22.

Bei dem in den Figuren 1 gezeigten Ausführungsbeispiel befindet sich zwischen der Stellspindel 16 und dem Bremsbelag 18 alternativ zu einem die Kraft auf eine größere Fläche an der Rückenplatte 20 verteilendes Druckstück eine Verschlusskappe 24. Die Verschlusskappe 24 ist topfförmig ausgebildet und umfasst einen die Bremskraft nahezu unverändert weiterleitenden Boden 26 und einen in axialer Richtung weisenden, dass freie Ende 28 der Stellspindel 16 umfassenden Kragen 30. Der Boden 26 hat einen geringfügig größeren Durchmesser als die Stellspindel. Die Ausbildung ist derart, dass eine Relativbewegung zwischen dem freien Ende 28 der Stellspindel 16 und der der Stellspindel 16 zugewandten Seite des Bodens 26 ermöglicht ist, da die Stellspindel zur Nachstellung des Lüftspiels um ihre Längsachse verdrehbar angeordnet ist.

Bei dem in der Figur 1 gezeigten Ausführungsbeispiel ragt die Stellspindel 16 durch eine Durchtrittsöffnung 36 des Bremssattels 14, die von einer Dichtungsbaugruppe 38 verschlossen ist. Die Dichtungsbaugruppe 38 dichtet den im Inneren des Bremssattel 14 vorhandenen Raumes 39 ab und weist bei der in der Figur 1 gezeigten Ausführungsbeispiel eine Verschlussplatte 40, einen Faltenbalg 42 und einen Abstandshalter 44 auf. Der Faltenbalg 42 weist eine zentrale Öffnung 43 auf, die mit der am Faltenbalg 42 befestigten Verschlusskappe 24 verschlossen ist, wodurch der Raum 39 sicher abgedichtet wird. Allerdings sind auch Ausführungsformen denkbar, bei denen die Dichtungsbaugruppe keine Verschlussplatte 40 vorsieht, sondern nur den Faltenbalg 42 und den Abstandhalter 44.

Der Faltenbalg 42 ist mit der Verschlussplatte 40 verdrehsicher verbunden und ist im Bereich seines einen Endes 47 an der Verschlussplatte und im Bereich seines anderen Endes 49 am Kragen 30 stoffschlüssig, insbesondere durch vulkanisieren, fluiddicht und dauerhaft verbunden.

Der Faltenbalg 42 ist als Faltenbalg mit Faltabschnitten 46 und Faltenspitzen 48 ausgebildet ist, wobei die einzelnen Faltabschnitte 46 in radialer Richtung größer werdende Durchmesser aufweisen. In einem nicht entfalteten Zustand des Faltenbalgs, wie in Figur 1 gezeigt, liegen benachbarte Faltabschnitte 46 nebeneinander und die Faltspitzen 48 wenigstens weitgehend in einer quer zur Längsachse verlaufenden Faltspitzenebene 50.

Der in der Figur 1 gezeigte Abstandshalter 44 ist innerhalb des von der Dichtungsbaugruppe 38 abgedichteten Raums 39 vorgesehen. Der Abstandshalter 44 ist als separates Bauteil ausgebildet und weist einen um eine Längsachse 52 verlaufenden Ringabschnitt 54 und zwei oder mehr Segmente 56 umfasst, wobei zwischen dem Ringabschnitt 54 und den Segmenten 56 Biegeabschnitte 58 derart vorgesehenen sind, dass die Segmente 56 gegenüber dem Ringabschnitt 54 bewegbar sind.

In den Figuren 1-3 befinden sich die Segmente 56 in einer Grundposition, in der sie mit der Längsachse 52 im Wesentlichen einen Winkel α von 90° einschließen. Die Segmente sind im Wesentlichen flach und jeweils im Wesentlichen in einer Ebene liegend ausgebildet. In der gezeigten Grundposition liegen sämtliche Segmente im Wesentlichen in einer gemeinsamen Ebene, die parallel zur Faltspitzenebene 50 verläuft. Die Grundposition kann insbesondere auch eine Lager- oder Transportposition sein.

Die Biegeabschnitte 58 sind derart ausgebildet sind, dass die Segmente 56 gegenüber dem Ringabschnitt 54 plastische oder elastisch nachgiebig bewegbar sind. Bei einer elastisch nachgiebigen Ausbildung sind die Segmente 56 bestrebt, ihre in den Figuren 1-3 gezeigte Grundposition einzunehmen. Die Biegeabschnitte 58 sind insbesondere derart ausgebildet, dass die Segmente 56 gegenüber der Längsachse 52 einen Biegewinkel im Bereich zwischen wenigstens 10° und 90° einschließen können.

Die Biegeabschnitte 58 werden bei dem in den Figuren 1-3 gezeigten Ausführungsbeispiel durch Stege 60 gebildet, wobei jedes Segment 56 durch 2 Stege 60 mit dem Ringabschnitt 54 verbunden ist. Zwischen dem Ringabschnitt 54, den jeweiligen beiden Stegen 60 und dem jeweiligen Segment 54 ist ein entlang ihres Umfangs geschlossene Ausnehmung 61 vorgesehen. Die Ausbildung ist derart, dass die an einem Segment 56 vorgesehenen Stege 60 beabstandet zum Seitenrand 62 des jeweiligen Segments angeordnet sind. Die einzelnen Segmente sind insbesondere ringssegmentartig, mit einem in der Figur 2 radial außen liegenden Außenrand 64 und einem radial innenliegenden Innenrand 66 ausgebildet, wobei die jeweiligen Außenränder 64 wenigstens weitgehend parallel zu den jeweiligen Innenrändern 66 verlaufen. Vorzugsweise verlaufen auch die Seitenränder 62 nicht konzentrisch hin zur Längsachse 52, sondern sind nahezu oder wenigstens weitgehend parallel zueinander verlaufend ausgebildet.

Vorzugsweise ist zwischen jeweils benachbarten Stegen 60 ein wenigstens weitgehend gleich großer Abstand S vorhanden.

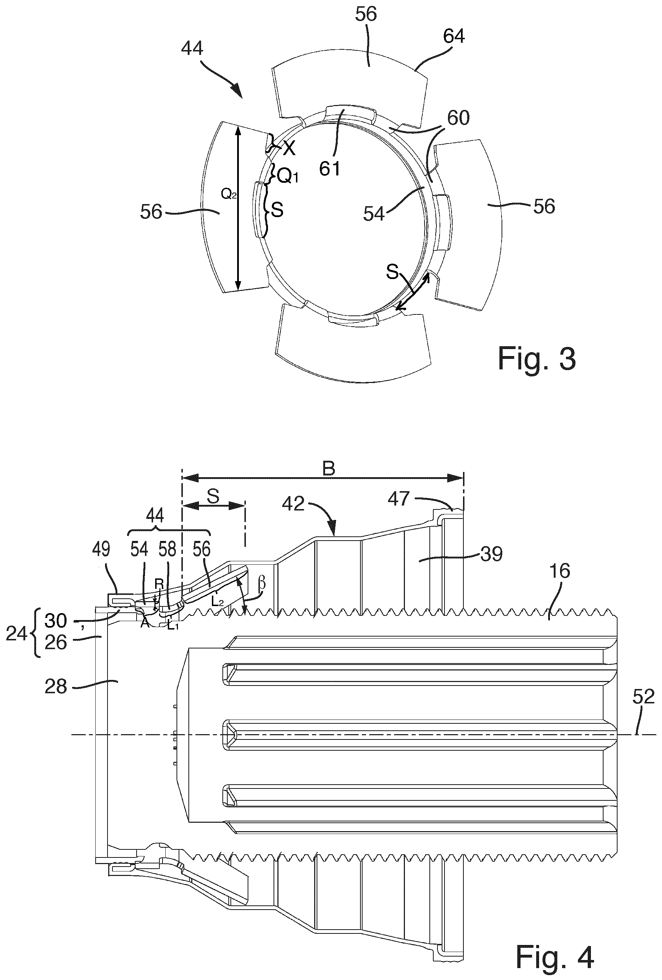

Weiterhin wird aus Figur 3 deutlich, dass die Stege 60 eine Quererstreckung Q₁ und die Segmente 56 eine Quererstreckung aufweisen, wobei der Verhältnis zwischen der Quererstreckung Q₁ eines Stegs und der Quererstreckung Q₂ eines Segments im Bereich von 1:15 bis 1:3, vorzugsweise im Bereich von 1:12 bis 1:5 und weiter vorzugsweise im Bereich von 1:10 bis 1:7 liegt. Sollten die Seitenränder 62 nicht parallel zueinander verlaufen, dann gilt für die Quererstreckung Q2 das gemittelte Maß.

Weiterhin wird aus Figur 3 deutlich, dass die Stege 60 die Quererstreckung Q₁ aufweisen und dass zwischen zwei Stegen 60 ein Abstand S vorgesehen ist, wobei das Verhältnis zwischen der Quererstreckung Q₁ eines Stegs und des Abstands S im Bereich von 1:10 bis 1:1, vorzugsweise im Bereich von 1:5 bis 1:1 und weiter vorzugsweise im Bereich von 1:2,5 bis 1:1,5 liegt.

Weiterhin wird aus Figur 3 deutlich, dass die Stege 60 die Quererstreckung Q₁ aufweisen und wobei die Stege um ein Maß X gegenüber den Seitenrändern 62 seitlich nach innen zurückversetzt sind, wobei das Verhältnis zwischen der Quererstreckung Q₁ eines Stegs und des Maßes X im Bereich von 1:4 bis 1:0,25, vorzugsweise im Bereich von 1:2 bis 1:0,5 und weiter vorzugsweise im Bereich von 1:1,25 bis 1:0,75 liegt.

Weiterhin ist vorteilhaft, wenn die Biegeabschnitte 58 eine Materialstärke ausweisen, die geringer ist als die Materialstärke der Segmente 56 und/oder des Ringabschnitts 54.

Wie aus den Figuren 2 und 3 deutlich wird, ist der Ringabschnitt 54 geschlossen und vollständig umlaufenden ausgebildet. Der Ringabschnitt 54 ist dabei insbesondere am Kragen 30 und/oder am Faltenbalg 42 befestigt, insbesondere durch kleben (stoffschlüssig) oder durch geeignete Rastmittel (formschlüssig). Auch ein Aufpressen (kraftschlüssig) wäre denkbar.

Die Ausbildung ist weiter derart, dass dann, wenn die Stellspindel 16 hin zum Bremsbelag 18 verlagert wird, der Faltenbalg 42 seine in den Figuren 1 und 2 dargestellte Grundposition verlässt und am Ende des maximalen Verstellwegs der Stellspindel 16 eine entfaltete Endposition einnimmt, wie sie in Figur 4 gezeigt ist. Aufgrund der sich ändernden Geometrie des Faltenbalgs 42 erfolgt eine zwangsweise Verformung des Abstandhalter 44. Die Segmente 56 werden hin zur Stellspindel 16 gedrängt, sodass sich ein minimaler Biegewinkel β von ca. 10° ergibt. Die Segmente 56 bilden dann eine Art Trichter aus, wobei die Seitenränder der Segmente 56 vorzugsweise wenigstens einen geringfügigen Abstand zueinander aufweisen, sodass eine Kollision der Segmente sowohl in der Grundposition als auch in der Endposition ausgeschlossen ist.

Um eine Beschädigung oder ein ungewolltes Bewegen des Faltenbalg 42 durch die Segmente 46 zu unterbinden, ist die Biegesteifigkeit der Biegeabschnitte 58 geringer ist als die Formstabilität des Faltenbalgs 42.

In dem Fall, in dem die Biegeabschnitte elastisch nachgiebig ausgebildet sind, erfolgt nach einer Rückstellung der Stellspindel, beispielsweise nach einem Wechsel der Bremsbeläge 18, ein automatisches Rückstellen der Segmente 56 aus der in der Figur 4 gezeigten Endposition, mit einem Biegewinkel von ca. 10° gegenüber der Längsachse 52, in die in der Figur 1 gezeigte Grundposition, mit einem Biegewinkel von ca. 90° gegenüber der Längsachse 52.

Aus Figur 4 wird deutlich, dass die Segmentlänge S der einzelnen Segmente 56 in Längsrichtung 52 bei maximal ausgespindelter Stellspindel im Bereich von ca. 25% der axialen Balgerstreckung B beträgt. Andere, ebenfalls vorteilhafte Ausführungsform ergeben sich bei einem Wert von 30-50%. In Bezug auf den Faltenbalg beträgt die Segmentlänge S vorzugsweise mehr als eine und weniger als drei Faltenbreite(n) 42.

Wie weiter aus Figur 4 deutlich wird, weist der Ringabschnitt 54 eine axiale Erstreckung A und eine radiale Erstreckung R auf, wobei die axiale Erstreckung größer als die axiale Erstreckung ist. Weiterhin wird aus Figur 4 deutlich, dass die Stege 60 eine Längserstreckung L₁ und die Segmente 56 eine Längserstreckung L₂ aufweisen, wobei das Verhältnis zwischen der Längserstreckung eines Stegs L₁ und der Längserstreckung eines Segments L₂ im Bereich von 1:10 bis 1:1, vorzugsweise im Bereich von 1:7 bis 1:2 und weiter vorzugsweise im Bereich von 1:5 bis 1:2 liegt.

Es hat sich weiterhin als vorteilhaft gezeigt, wenn das Längenverhältnis zwischen dem Ringabschnitt 54 in Längsrichtung und einem Segment 56 in seiner Grundposition in radialer Richtung im Bereich zwischen 1:3 und 1:7 und vorzugsweise im Bereich zwischen 1:4 und 1:5 liegt.

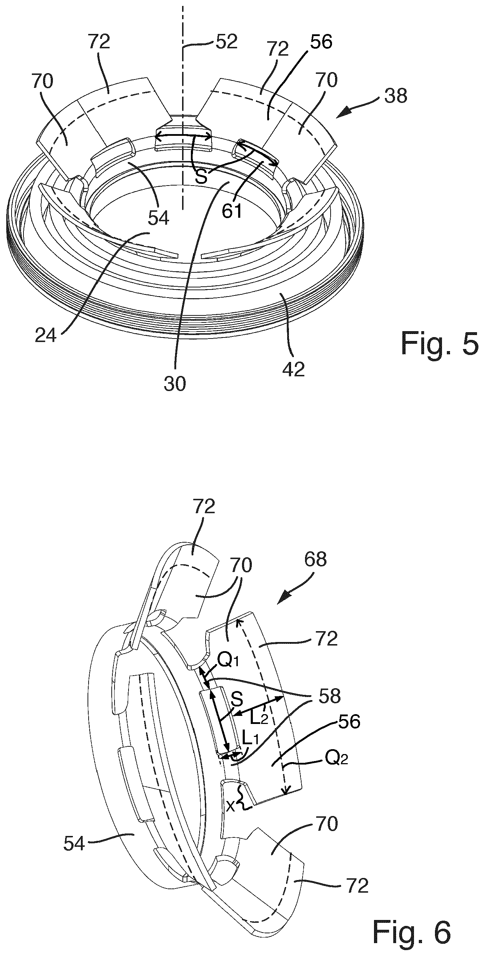

In den Figuren 5 und 6 dargestellte weitere Ausführungsform eines Abstandhalter 68 entspricht im Wesentlichen dem Abstandhalter gemäß Figur 1-4, wobei entsprechende Bauteile mit entsprechenden Bezugszeichen versehen sind. Die Ausführungsform gemäß den Figuren 5-6 unterscheidet sich lediglich in der Art der Ausbildung des Abstandshalters 68.

Anders als beim Abstandhalter 44, wie er in den Figuren 1-4 gezeigt ist, weisen die die Segmente 56 des Abstandshalters 68 zwei Abschnitte auf, nämlich einen ersten, an dem Biegeabschnitt 58 angrenzenden tricherteilförmig Grundabschnitt 70 und einen sich daran anschließenden, den Außenrand bildenden zweiten, ebenfalls tricherteilförmig ausgebildeten Endabschnitt 72. Die Endabschnitte 72 können mit der Längsachse 52 einen unterschiedlichen, vorzugsweise kleineren Winkel einschließen als die Grundabschnitt 70. Insgesamt wird dadurch der Trichtereffekt verstärkt und der Faltenbalg 42 sicher vor einer Kollision mit der Oberfläche der Stellspindel 16 geschützt. Ein größerer Winkel kann vorteilhaft sein, wenn die Biegeabschnitte 58, 60 nicht elastisch sind. Dann treten die Endabschnitte 72 beim Zurückdrehen der Stellspindel 16 hin zu deren Grundstellung mit einem flachen Winkel beispielsweise mit dem die Stellspindel 16 aufnehmenden bzw. umgreifenden Bauteil in Kontakt und schirmen die Segmente 56 an diesem entlang in Richtung Grundstellung auf.

Anders als der Abstandhalter 44 gemäß den Figuren 1-4, schließen beim Abstandhalter 68 die Segmente 56 in der Grundposition mit der Längsachse 52 einen Biegewinkel von ca. 45° ein. Dies hat den Vorteil, dass ein Berührkontakt zwischen dem Faltenbalg 42 und den Segmenten 56 erst dann auftritt, wenn die Stellspindel 16 entsprechend weit entspindelt, also in Richtung Bremsbelag 18 nachgestellt ist.

Die in der in den Figuren 5-6 gezeigten Grundposition des Abstandshalters 68 schließen die Segmente keinen Biegewinkel zur Längsachse von 90° ein, sondern von ca. 45°.

Der Faltenbalg 42 kann insbesondere aus einem Kunststoff und vorzugsweise aus TEP, TPU, TPC und/oder TPV bestehen. Die Materialstärke des Abstandshalters 44 beträgt vorzugsweise zwischen 0,4 mm und 1,2 mm und vorzugsweise zwischen 0,7 bis 0,9 mm. Bei einer solch geringen Materialstärke kann ein Faltenabschnitt 46 ein in Grundstellung flaches Segment bei Kontakt elastisch, teiltrichterförmig verbiegen.

Auch wenn bei den in den Figuren dargestellten Ausführungsformen der Abstandhalter 44 als separates Bauteil ausgebildet ist, ist denkbar, dass der Abstandhalter 44 einstückig mit dem Faltenbalg oder einstückig mit der Verschlusskappe 24 ausgebildet ist.

Auch wenn bei den in den Figuren dargestellten Ausführungsformen der Abstandhalter 44 innerhalb des vom Faltenbalg 42 abgedichteten Raumes 39 zwischen dem Faltenbalg 42 und der Stellspindel 16 vorgesehen ist, kann ein dem Abstandhalter 44 entsprechender Abstandhalter auch außerhalb des Faltenbalgs im Bereich zwischen dem Faltenbalg und einem nicht gezeigten Druckstück bzw. dem Bremsbelag 18 vorgesehen sein.

### Bezugszeichenliste:

- 10: Scheibenbremsen
- 12: Bremsscheibe
- 14: Bremssattel
- 16: Stellspindel
- 18: Bremsbelag
- 20: Rückenplatte
- 22: Reibbelag
- 24: Verschlusskappe
- 26: Boden
- 28: freies Ende Stellspindel
- 30: Kragen
- 36: Durchtrittsöffnung
- 38: Dichtungsbaugruppe
- 39: abgedichteter Raum
- 40: Verschlussplatte
- 42: Faltenbalg
- 43: Öffnung im Faltenbalg
- 44: Abstandshalter
- 46: Faltabschnitte
- 47: Ende Faltenbalg
- 48: Faltspitzen
- 47: Ende Faltenbalg
- 49: Ende Faltenbalg
- 50: Faltspitzenebene
- 52: Längsachse
- 54: Ringabschnitt
- 56: Segmente
- 58: Biegeabschnitte
- 60: Stege
- 61: Ausnehmung
- 62: Seitenrand
- 64: Außenrand
- 66: Innenrand
- 68: Abstandhalter
- 70: Grundabschnitt
- 72: Endabschnitt
- L1: Längserstreckung Steg
- L2: Längserstreckung Segment
- Q1: Quererstreckung Steg
- Q2: Quererstreckung Segment
- S: Abstand zwischen Stegen
- X: Rückversatz Steg

## Patentansprüche

1. Abstandshalter (44, 68) für eine Scheibenbremse (10) insbesondere eines Nutzfahrzeugs, zur Anordnung zwischen zum einem einen Faltenbalg (42) der Scheibenbremse (10) und zum anderen einem Druckstück und/oder einer Stellspindel (16) der Scheibenbremse (10), **dadurch gekennzeichnet, dass** der Abstandshalter (44, 68) einen um eine Längsachse (52) verlaufenden Ringabschnitt (54) und zwei oder mehr Segmente (56) umfasst, wobei die einzelnen Segmente (56) mit einem radial außen liegenden Außenrand (64), einem radial innenliegenden Innenrand (66) und mit zwei Seitenränder (62) ausgebildet sind, wobei zwischen dem Ringabschnitt (54) und den Segmenten (56) als Stege (60) ausgebildete, zum Seitenrand des jeweiligen Segments (56) beabstandet angeordnete Biegeabschnitte (58) derart vorgesehenen sind, dass die Segmente (56) gegenüber dem Ringabschnitt (54) bewegbar sind.

2. Abstandshalter (44, 68) nach Anspruch 1, wobei zwischen jedem Segmente (56) und dem Ringabschnitt (54) wenigstens zwei voneinander beabstandete Stege (60) vorgesehen sind.

3. Abstandshalter (44, 68) nach Anspruch 1 oder 2, wobei der Abstandshalter (44, 68) zur Anordnung zwischen dem Faltenbalg und der vom Faltenbalg umgebenen Stellspindel ausgebildet ist.

4. Abstandshalter (44, 68) nach Anspruch 1, 2 oder 3, wobei die Biegeabschnitte (58) eine Materialstärke ausweisen, die geringer ist als die Materialstärke der Segmente (56) und/oder des Ringabschnitts (54).

5. Abstandshalter (44, 68) nach einem der vorhergehenden Ansprüche, wobei die Biegeabschnitte (58) und/oder die Seitenränder (62) zweier benachbarter Segmente (56) derart ausgebildet sind, dass die Segmente (56) gegenüber der Längsachse (52) einen Biegewinkel im Bereich zwischen wenigstens 10° und 90° einschließen.

6. Abstandshalter (44, 68) nach einem der vorhergehenden Ansprüche, wobei die Segmente (56) so ausgebildet sind, dass dann, wenn der Biegewinkel im Bereich von 90° liegt, sich eine wenigstens weitgehend ebene Konfiguration, und wenn der Biegewinkel im Bereich zwischen 50° und 10° liegt, sich eine trichterförmige Konfiguration ergibt.

7. Abstandshalter (44, 68) nach einem der vorhergehenden Ansprüche, wobei das Längenverhältnis in Längsrichtung zwischen dem Ringabschnitt (54) und einem Segment (56) im Bereich zwischen 1:3 und 1:7 und vorzugsweise im Bereich zwischen 1:4 und 1:5 liegt.

8. Abstandshalter (68) nach einem der vorhergehenden Ansprüche, wobei wenigstens ein Segment (56) und vorzugsweise alle Segmente (56) tricherteilförmig um die Längsachse (52) verlaufend ausgebildet sind.

9. Abstandshalter (44) nach einem der vorhergehenden Ansprüche, wobei wenigstens ein Segment (56) und vorzugsweise alle Segmente (56) flach und jeweils in einer Ebene liegend ausgebildet sind.

10. Abstandshalter (44, 68) nach einem der vorhergehenden Ansprüche, wobei die Segmentlänge in Längsrichtung (L) bei maximal ausgespindelter Stellspindel (16) 20 bis 80% und vorzugsweise 30 bis 50% der axialen Balgerstreckung (B) beträgt.

11. Abstandshalter (44, 68) nach einem der vorhergehenden Ansprüche, wobei die Stege (60) eine Längserstreckung (L₁) und die Segmente (56) eine Längserstreckung (L₂) aufweisen, wobei das Verhältnis zwischen der Längserstreckung (L₁) eines Stegs (60) und der Längserstreckung (L₂) eines Segments im Bereich von 1:10 bis 1:1, vorzugsweise im Bereich von 1:7 bis 1:2 und weiter vorzugsweise im Bereich von 1:5 bis 1:2 liegt.

12. Abstandshalter (44, 68) nach einem der vorhergehenden Ansprüche, wobei die Stege (60) eine Quererstreckung (Q₁) und die Segmente (56) eine Quererstreckung (Q₂) aufweisen, wobei der Verhältnis zwischen der Quererstreckung (Q₁) eines Stegs (60) und der Quererstreckung (Q₂) eines Segments (56) im Bereich von 1:15 bis 1:3, vorzugsweise im Bereich von 1:12 bis 1:5 und weiter vorzugsweise im Bereich von 1:10 bis 1:7 liegt.

13. Abstandshalter (44, 68) nach einem der vorhergehenden Ansprüche, wobei die Stege (60) eine Quererstreckung (Q₁) aufweisen und wobei zwischen zwei an einem Segment (56) vorgesehenen Stegen (60) ein Abstand (S) vorgesehen ist, wobei das Verhältnis zwischen der Quererstreckung (Q₁) eines Stegs (56) und des Abstands (S) im Bereich von 1:10 bis 1:1, vorzugsweise im Bereich von 1:5 bis 1:1 und weiter vorzugsweise im Bereich von 1:2,5 bis 1:1,5 liegt.

14. Abstandshalter (44, 68) nach einem der vorhergehenden Ansprüche, wobei die Stege (60) eine Quererstreckung (Q₁) aufweisen und wobei die Stege (60) um ein Maß X gegenüber den Seitenrändern (62) seitlich nach innen zurückversetzt sind, wobei das Verhältnis zwischen der Quererstreckung (Q₁) eines Stegs (60) und des Maßes X im Bereich von 1:4 bis 1:0,25, vorzugsweise im Bereich von 1:2 bis 1:0,5 und weiter vorzugsweise im Bereich von 1:1,25 bis 1:0,75 liegt.

15. Dichtungsbaugruppe (38) zur Abdichtung eines Bremssattels gegenüber einem Bremsbelag (18), mit einem Faltenbalg (42) und mit einem Abstandshalter (44, 68), **dadurch gekennzeichnet, dass** der Abstandshalter (44, 68) nach einem der vorhergehenden Ansprüche ausgebildet ist.

16. Dichtungsbaugruppe (38) nach Anspruch 15, wobei eine Verschlusskappe (24) vorgesehen ist, die den Faltenbalg (42) auf seiner dem Bremsbelag (18) zugewandten Seite verschließt.

17. Dichtungsbaugruppe (38) nach Anspruch 16, wobei die Verschlusskappe (24) topfförmig mit einem umlaufenden Kragen (30) ausgebildet ist und wobei der Ringabschnitt (54) zwischen dem Faltenbalg (42) und dem Kragen (30) oder auf der dem Faltenbalg (42) abgewandten Seite des Kragens (30) befestigt ist.

18. Dichtungsbaugruppe (38) nach wenigstens einem der Ansprüche 15-17, wobei der Faltenbalg (42) Faltabschnitte (46) und Faltenspitzen (48) aufweist, wobei die einzelnen Faltabschnitte (48) größer werdende Durchmesser aufweisen und wobei in einem nicht entfalteten Zustand des Faltenbalgs benachbarte Faltabschnitte (46) nebeneinander und die Faltspitzen (48) wenigstens weitgehend in einer quer zur Längsachse (52) verlaufenden Faltspitzenebene (50) liegen.

19. Dichtungsbaugruppe (38) nach Anspruch 18, wobei die Segmente (56) im nicht entfalteten Zustand des Faltenbalgs in der oder wenigstens weitgehend parallel zur Faltspitzenebene (50) verlaufen.

20. Dichtungsbaugruppe (38) nach einem der Ansprüche 15-19, wobei die Dichtungsbaugruppe (38) eine Verschlussplatte (40) zum Verschließen einer im Bremssattel (14) vorgesehenen Durchtrittsöffnung (36) aufweist, wobei die Verschlussplatte (40) eine Öffnung für die Stellspindel (16) aufweist und wobei das dem Abstandhalter (44,68) abgewandte Ende des Faltenbalgs (42) an der Verschlussplatte (40) befestigt ist.

21. Dichtungsbaugruppe (38) nach einem der Ansprüche 15-20, wobei die Biegesteifigkeit der Biegeabschnitte (58) geringer ist als die Formstabilität des Faltenbalgs (42).

22. Scheibenbremse (10) für ein Nutzfahrzeug,
mit einem eine Bremsscheibe (12) übergreifenden Bremssattel (14) und mit im Bremssattel (14) gelagerten Bremsbelägen (18),
mit einer im Bremssattel (14) gelagerten, von einer Zuspanneinrichtung beaufschlagbaren Stellspindel (16), die beim Bremsvorgang die Bremsbeläge (18) gegen die Bremsscheibe (12) drängt, und
mit einer Dichtungsbaugruppe (38) zur Abdichtung des Bremssattels (14) gegenüber dem Bremsbelag (18),
wobei die Dichtungsbaugruppe (38) einen Faltenbalg (42) zum Abdichten einer die Stellspindel (16) umgebenden, im Bremssattel (14) oder in einer am Bremssattel anordenbaren Verschlussplatte (40) vorgesehenen Durchtrittsöffnung (36), und einen Abstandshalter (44, 68) aufweist,
**dadurch gekennzeichnet, dass** der Abstandshalter (44, 68) nach einem der Ansprüche 1 bis 14 ausgebildet ist und/oder dass die Dichtungsbaugruppe (38) nach einem der Ansprüche 15 bis 21 ausgebildet ist.
